# EUROPÄISCHE PATENTSCHRIFT

(11) **EP 2 694 355 B1**
(45) Veröffentlichungstag und Bekanntmachung des Hinweises auf die Patenterteilung: **04.03.2015**
(21) Anmeldenummer: 12714570.4
(22) Anmeldetag: 23.03.2012
(51) Int. Cl.: F16H 57/021, F16H 57/02, B62D 5/04, F16H 57/022

(54) **ELEKTROMECHANISCHE SERVOLENKUNG MIT SPIELAUSGLEICH FÜR DAS SCHNECKENRADGETRIEBE**
ELECTROMECHANICAL POWER STEERING SYSTEM WITH PLAY COMPENSATION FOR THE WORM GEAR MECHANISM
SERVODIRECTION ÉLECTROMÉCANIQUE COMPORTANT UN COMPENSATEUR DE JEU POUR L'ENGRENAGE À VIS SANS FIN

(30) Priorität: 04.04.2011 DE 102011015883
(43) Veröffentlichungstag der Anmeldung: 12.02.2014
(73) Patentinhaber: ThyssenKrupp Presta AG, 9492 Eschen (LI)
(72) Erfinder: GALEHR, Robert, FL-9493 Mauren (LI)
(74) Vertreter: Lenzing Gerber Stute
(86) Internationale Anmeldenummer: PCT/EP2012/001276
(87) Internationale Veröffentlichungsnummer: WO 2012/136315

(56) Entgegenhaltungen:
- EP-A1- 1 676 768
- WO-A1-99/11502
- DE-A1- 10 053 183
- DE-A1-102004 014 825
- DE-A1-102007 019 324

## Beschreibung

Die vorliegende Erfindung betrifft eine elektromechanische Servolenkung mit den Merkmalen des Oberbegriffs des Anspruchs 1 bzw. des Anspruchs 6.

Bei der Montage von Wellen ist es denkbar und möglich, Gleitlager zu verwenden, die einen Außenring mit einer äußeren Umfangsfläche aufweisen, welche exzentrisch zu der Lagerfläche angeordnet ist. Diese Lagerung ist jedoch nur für umlaufende Wellen geeignet. Sie ist nachteilig, wenn eine Welle häufig zum Stillstand kommt, weil Gleitlager ein hohes Anlaufmoment aufweisen. Sie erfordern weiter grundsätzlich eine kontinuierliche Schmierung und eine Überwachung im Betrieb. Daher werden Gleitlagerungen nicht für die Lagerung von Antriebswellen von elektromechanischen Servolenkungen eingesetzt.

Das europäische Patent EP 1 727 723 B1 zeigt ein Kugellager in einer elektromechanischen Servolenkung mit einem exzentrischen Außenring, mit dem die Position einer in dem Lager gelagerten Welle einstellbar ist. Nach der Einstellung soll die äußere Lagerschale in dem Lagersitz fixiert werden. Ein Spielausgleich im Betrieb, wie er beispielsweise durch Verschleiß erforderlich sein kann, ist jedoch nicht vorgesehen.

Das Dokument US 6,357,313 B1 zeigt eine elektromechanische Servolenkung mit einem Schneckengetriebe, bei dem das freie Ende der Schneckenwelle in einem Kugellager mit konzentrischem Lageraußenring gelagert ist. Das Kugellager selbst ist in einem Exzenter angeordnet, der in dem Lenkungsgehäuse um eine Achse drehbar angeordnet ist, die einen Abstand zu der Drehachse des Wälzlagers aufweist. Auf diese Weise ist durch Drehung des Exzenters in dem Gehäuse die Position des Wälzlagers verschiebbar und damit der Eingriff der Schneckenwelle in das zugeordnete Schneckenrad einstellbar. In einer Ausführungsform ist der Exzenter mit einer Federvorspannung beaufschlagt, so dass das Wälzlager mit der Welle gegen den Verzahnungseingriff vorgespannt sein kann. Der Exzenter ist hierbei gegenüber dem Getriebegehäuse in einer Gleitlagerung gelagert.

Weiterhin ist ein Schneckengetriebe einer elektrischen Servolenkung aus der DE 10 2007 019 324 A1 bekannt, die den Merkmalen entsprechend dem Oberbegriff des unabhängigen Anspruchs 1 entspricht, während die EP 1 676 768 A1 dem Oberbegriff des unabhängigen Anspruchs 6 entspricht.

Die letztgenannte Ausführungsform des Standes der Technik, die als gattungsbildend betrachtet wird, ist zwar geeignet, im laufenden Betrieb eine Veränderung des Verzahnungseingriffs zwischen der Schneckenwelle und dem Schneckenrad auszugleichen. Die hierfür erforderlichen Kräfte oder Momente, die letztlich über den Verzahnungseingriff aufgebracht werden müssen, sind jedoch recht hoch, da die Gleitlagerung des Exzenters in dem Getriebegehäuse ein hohes Losbrechmoment aufweist. Entsprechend ist die Belastung der Getriebekomponenten hoch, wenn sich die Schneckenwelle und das Schneckenrad in einem zu engen Eingriff befinden.

Es ist deshalb Aufgabe der vorliegenden Erfindung, eine selbsttätig einstellende Lagerung für eine Schneckenwelle in dem Getriebe einer elektromechanischen Servolenkung zu schaffen, bei der die erforderlichen Kräfte für die selbsttätige Verstellung geringer sind.

Diese Aufgabe wird von einer Vorrichtung mit den Merkmalen der Anspruchs 1 oder 6 gelöst.

Weil einer elektromechanischen Servolenkung mit einem elektrischen Servomotor, der eine Schneckenwelle antreibt, die mit einem auf einer Lenkwelle angeordneten Schneckenrad kämmt, wobei das Schneckenrad mit einer Eingangswelle eines Lenkgetriebes in Wirkverbindung steht und wobei die Schneckenwelle und die Lenkwelle in einem gemeinsamen Getriebegehäuse drehbar gelagert sind, die Schneckenwelle ein freies motorfernes Ende aufweist, das in einem Wälzlager mit einem Innenring, Wälzkörpern und einem Zwischenring gelagert ist, wobei der Zwischenring eine innere Lauffläche für die Wälzkörper und eine äußere Lauffläche für äußere Wälzkörper aufweist, und wobei die innere Lauffläche und die äußere Lauffläche des Zwischenrings exzentrisch zueinander angeordnet sind, kann die Schneckenwelle bei Belastungen oder bei Veränderungen des Eingriffs aufgrund von Temperatureinflüssen schnell ausweichen. Die Wälzlagerung des Exzenters in dem Getriebegehäuse erlaubt eine schnelle Ausweichreaktion aufgrund des niedrigen Losbrechmoments, welches für die Ausweichreaktion überwunden werden muss.

Wenn der Zwischenring mit den Wälzkörpern und einem Außenring ein zu dem Wälzlager exzentrisches Wälzlager bildet, dessen Außenring in einem Lagersitz in dem Getriebegehäuse sitzt, wird die Funktion weiter verbessert. Vorzugsweise wird der Zwischenring mit Federmitteln so vorgespannt, dass die Schneckenwelle mit dem Schneckenrad in Eingriff gedrängt wird.

Die Anordnung wird besonders kompakt, wenn das Wälzlager auf dem freien Ende der Schneckenwelle ein Nadellager ist.

Eine besonders leichtgängige Einstellbarkeit wird erreicht, wenn das den Zwischenring in dem Getriebegehäuse lagernde Wälzlager ein Kugellager ist.

Die Aufgabe wird außerdem dadurch gelöst, dass bei einer elektromechanischen Servolenkung mit einem elektrischen Servomotor, der eine Schneckenwelle antreibt, die mit einem auf einer Lenkwelle angeordneten Schneckenrad kämmt, wobei das Schneckenrad mit einer Eingangswelle eines Lenkgetriebes in Wirkverbindung steht und wobei die Schneckenwelle und die Lenkwelle in einem gemeinsamen Getriebegehäuse drehbar gelagert sind, die Schneckenwelle ein freies motorfernes Ende aufweist, das in einem Wälzlager mit einem Innenring, Wälzkörpern und einem Außenring gelagert ist, wobei das Wälzlager in einem Exzenterhebel sitzt, der um eine außerhalb des Wälzlagers liegende Schwenkachse schwenkbar in dem Getriebegehäuse gelagert ist, und ein elektromechanischer Aktuator vorgesehen ist, um durch Betätigung des Exzenterhebels die Position der Schneckenwelle relativ zu dem Schneckenrad in Abhängigkeit von einer Steuerung einzustellen oder zu regeln.

Vorteilhaft ist der Exzenterhebel mittels einer Schraubenfeder derart vorgespannt, dass die Schneckenwelle in Eingriff mit dem Schneckenrad gedrängt wird.

Es kann auch vorgesehen sein, dass ein elektromechanischer Aktuator so in dem Getriebegehäuse angeordnet ist, dass er durch Betätigung des Zwischenrings die Position der Schneckenwelle relativ zu dem Schneckenrad in Abhängigkeit von einer Steuerung einzustellen oder zu regeln vermag. Insbesondere kann vorgesehen sein, dass die Steuerung oder Regelung in Abhängigkeit von einem von dem Servomotor aufgebrachten Drehmoment erfolgt. So kann der Eingriff lastabhängig gesteuert werden.

Nachfolgend werden Ausführungsbeispiele der vorliegenden Erfindung anhand der Zeichnung beschrieben. Es zeigen:
- Figur 1:: Das Getriebe einer erfindungsgemäßen Servolenkung in einem Längsschnitt entlang der Schneckenwelle;
- Figur 2:: Die Schneckenwelle mit ihrer Lagerung in einer perspektivischen Darstellung;
- Figur 3:: Die Schneckenwelle aus Figur 2 mit einer Federvorspannung; sowie
- Figur 4:: Eine Darstellung entsprechend Figur 3, wobei der Drehpunkt des Exzenters außerhalb des Lagers der Schneckenwelle liegt.

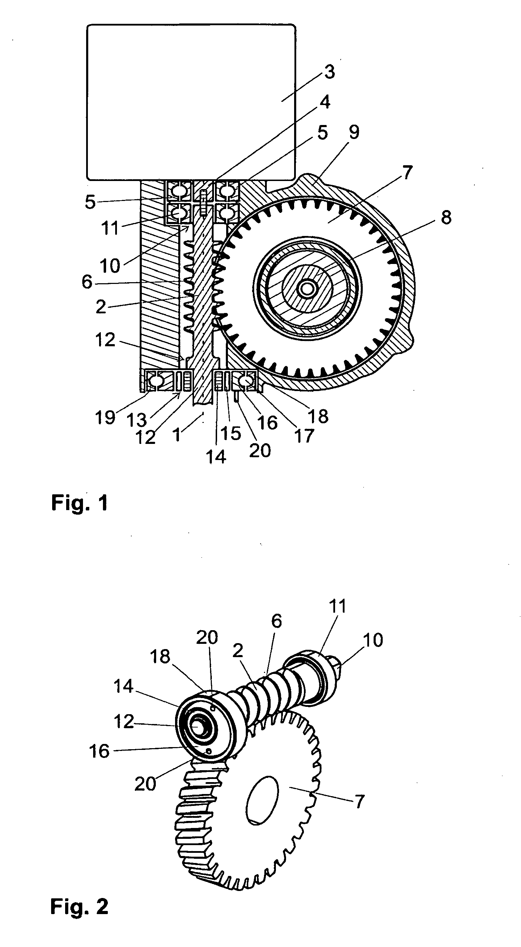

Die Figur 1 zeigt in einem Längsschnitt das Getriebe einer elektromechanischen Servolenkung und der Längsschnitt verläuft entlang einer Drehachse 1 einer Schneckenwelle 2, die von einem Elektromotor 3 angetrieben ist. Der Elektromotor 3 verfügt über eine Motorwelle 4, die über eine flexible Kupplung 5 mit der Schneckenwelle 2 drehfest gekoppelt ist. Die Schneckenwelle 2 kämmt über eine Schneckenverzahnung 6 mit einem Schneckenrad 7. Das Schneckenrad 7 wiederum ist drehfest mit einer Lenkwelle 8 verbunden, die zwischen einem nicht dargestellten Lenkrad und dem eigentlichen Lenkgetriebe des Kraftfahrzeugs verläuft.

Die genannten Bauelemente sind in einem gemeinsamen Getriebegehäuse 9 gelagert.

Die Lagerung der Schneckenwelle 2 in dem Gehäuse 9 erfolgt an einem motorseitigen Ende 10 der Schneckenwelle 2 in einem konventionellen Wälzlager 11, das als Kugellager ausgebildet ist. Das Kugellager 11 ist so ausgebildet, dass die Schneckenwelle 2 geringfügige Axialbewegungen und geringfügige Änderungen der Drehachse 1 gegenüber dem Gehäuse 9 ausführen kann.

Die Schneckenwelle 2 weist weiter ein motorfernes Ende 12 auf, welches ebenfalls in einem Wälzlager 13 gelagert ist. Das Wälzlager 13 weist einen Innenring 14, Wälzkörper 15 und einen Zwischenring 16 auf. Der Zwischenring 16 ist wiederum selbst an seiner Außenseite mit einer Laufrille für Kugeln 17 versehen. Die Kugeln 17 laufen in einem Außenring 18, der schließlich in einem Lagersitz 19 des Gehäuses 9 befestigt ist.

Der Zwischenring 16 ist schließlich mit einem Stift 20 versehen, der auf der dem Gehäuse 9 abgewandten Seite des Zwischenrings 16 befestigt ist.

Der Zwischenring 16 ist so ausgebildet, dass an seiner Innenseite eine Lauffläche für die Wälzkörper 15 des inneren Lagers 13 ausgebildet ist. Diese Lauffläche ist im wesentlichen zylindrisch ausgebildet, da in diesem Ausführungsbeispiel die Wälzkörper 15 als Nadeln vorgesehen sind. An seiner äußeren Umfangsfläche ist der Zwischenring 16 mit einer Kugellauffläche für die außen laufenden Kugeln 17 versehen, wobei die äußere Lauffläche nicht konzentrisch mit der inneren Lauffläche angeordnet ist. Bei Drehung der Schneckenwelle 2 bedeutet dies, dass der Zwischenring 16 die Position der Drehachse 1 definiert, während das innere Wälzlager 13 die leichte und spielfreie Drehbarkeit der Schneckenwelle 2 gegenüber dem Zwischenring 16 bewirkt. Eine Drehung des Zwischenrings 16 hingegen bewirkt eine Verlagerung der Drehachse 1 der Schneckenwelle 2 und damit eine Veränderung des Eingriffs der Schnecke 6 in das Schneckenrad 7. Auf diese Weise kann insbesondere eine Zustellung der Schneckenwelle 2 auf das Schneckenrad 7 bewirkt werden, um einen spielfreien Verzahnungseingriff zu erreichen.

Bei dieser Anordnung ist der Zwischenring 16 gegenüber dem Gehäuse 9 über die Wälzkörper 17 ebenfalls wälzgelagert. Insbesondere bildet der Zwischenring 16 selbst einen Teil dieses äußeren Lagers, das aus dem Zwischenring 16, den Wälzkörpern 17 und dem Lageraußenring 18 gebildet ist. Diese Anordnung erlaubt eine sehr leichtgängige Verstellung des Zwischenrings 16, auch wenn dieser unter Last steht. Die Einstellung der Position der Schneckenwelle 2, genauer gesagt, der Drehachse 1 der Schneckenwelle 2 in Relation zu dem Schneckenrad 7 ist auf diese Weise besonders fein und reaktionsschnell möglich.

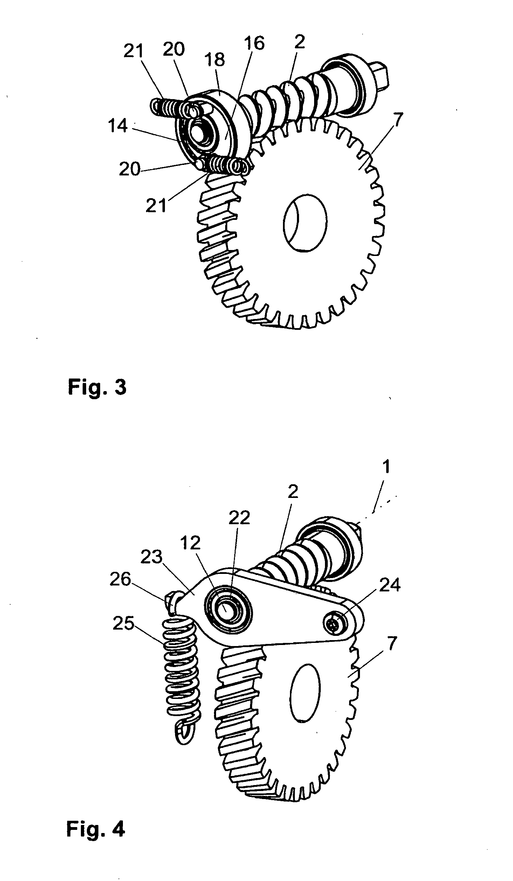

Die Figur 2 zeigt die Schneckenwelle mit den Wälzlagern sowie das mit der Schneckenwelle kämmende Schneckenrad 7 in einer perspektivischen Darstellung, wobei auf die Komponenten des Gehäuses und des Elektromotors verzichtet wurde. Gleiche Bauteile tragen gleiche Bezugsziffern. Der Zwischenring 16 ist hier mit zwei Betätigungselementen 20 versehen. Diese Betätigungselemente 20 können als Angriffspunkte für Federn zur elastischen Vorspannung dienen, wie dies nachfolgend zu Figur 3 beschrieben ist. Sie können auch als Angriffspunkte für einen elektrischen Aktuator dienen, der in Abhängigkeit von einer Steuerung oder Regelung den Zwischenring 16 betätigt.

In Figur 2 ist ersichtlich, dass die Drehachse der Schneckenwelle 2 konzentrisch zu dem Innenring 14 und zu der inneren Lauffläche des Zwischenrings 16 angeordnet ist, jedoch bezüglich der äußeren Lauffläche des Zwischenrings 16 und dem Außenring 18 exzentrisch liegt. Dem entsprechend bewirkt eine Drehung des Zwischenrings 16 eine Verlagerung der Drehachse 1 gegenüber dem Schneckenrad 7. Der Drehmittelpunkt des Zwischenrings 16, also der Punkt, um den der Zwischenring 16 gegenüber dem Gehäuse 9 drehbar ist, liegt mittig in dem Außenring 18. In Figur 2 ist erkennbar, dass dieser Drehpunkt innerhalb des inneren Wälzlagers 13 liegt, das aus dem Innenring 14, den Wälzkörpern 15 und der inneren Lauffläche des Zwischenrings 16 gebildet ist. Der räumliche Abstand zwischen diesen beiden Drehmittelpunkten kann als Exzentrizität des Zwischenringsrings 16 bezeichnet werden und diese Exzentrizität ist im vorliegenden Fall geringer als der Radius der inneren Lauffläche des Zwischenrings 16. Eine derart geringe Exzentrizität ist bei diesem Ausführungsbeispiel bevorzugt, da sie eine besonders feinfühlige Einstellung der Position der Schneckenwelle 2 erlaubt.

Die Figur 3 zeigt das Ausführungsbeispiel der Figur 2 mit zwei Schraubenfedern 21, die an den Betätigungselementen 20 angreifen. Die Betätigungselemente 20 sind hier als Stifte ausgebildet, die Achsparallel an der Stirnseite des Zwischenrings 16 angeordnet sind. Die Schraubenfedern 21 wirken auf Zug. Sie drängen den Zwischenring 16 bei dem Ausführungsbeispiel gemäß Figur 3 in eine Drehung entgegen dem Uhrzeigersinn. Da der Drehpunkt der Schneckenwelle 2 links neben dem Drehpunkt des Zwischenrings 16 liegt, wird die Schneckenwelle 2 durch die Federn gegen das Schneckenrad 7 gedrängt.

Die Figur 4 zeigt eine Anordnung, bei der die Schneckenwelle 2 an ihrem freien Ende 12 in einem konventionellen Wälzlager 22 drehbar gelagert ist. Das Wälzlager 22 sitzt mit seinem Außenring in einem Exzenterhebel 23, der einen entsprechenden Lagersitz aufweist. Der Exzenterhebel 23 ist in einer Schwenkachse 24 in dem Gehäuse 9 (hier nicht dargestellt) gelagert. Eine Schraubenfeder 25, die wiederum auf Zug wirkt, greift an einem hakenförmigen Ende 26 des Exzenterhebels 23 an, das der Schwenkachse 24 gegenüber liegt. Das Lager 22 ist zwischen der Schwenkachse 24 und dem Haken 26 angeordnet. Die Zugfeder 25 wirkt in der Figur 4 nach unten, sie zieht also den Exzenterhebel 23 und damit die Schneckenwelle 2 auf das Schneckenrad 7 zu. Auch auf diese Weise wird eine elastische Vorspannung der Schneckenwelle 2 gegen das Schneckenrad 7 erzielt. Wie in Figur 3 wird damit ein spielfreier Eingriff der Schneckenwelle 2 in das Schneckenrad 7 erreicht.

Im Unterschied zu den Ausführungen gemäß Figur 2 und Figur 3 wird bei der Ausführung gemäß Figur 4 das Lager 22 und damit die Drehachse der Schneckenwelle 2 auf einen erheblich größeren Radius bewegt, da die Schwenkachse 24 des Exzenterhebels 23 weiter von der Drehachse 1 der Schneckenwelle beabstandet ist als in den Figuren 2 und 3. Insbesondere ist hier die Exzentrizität, also der Abstand der Drehachse 1 von der Schwenkachse 24 zwischen dem einfachen und dem dreifachen Durchmesser des Wälzlagers 22 ausgewählt.

Im Betrieb ergeben diese Ausführungsbeispiele den Vorteil, dass die Lage der Schneckenwelle 2 in Bezug auf das Schneckenrad 7 einstellbar ist. Die Einstellung erfolgt in der Ausführung gemäß Figur 2 durch einen Aktuator, in der Ausführung nach den Figuren 3 und 4 durch Federvorspannung. Die Lagerung des Exzenters ist in allen Fällen so gestaltet, dass die Zustellung der Schneckenwelle 2 auf das Schneckenrad 7 zu besonders reibungsarm und mit geringem Losbrechmoment erfolgt. Auf diese Weise ist es möglich, kleine Änderungen in den Dimensionen und in der relativen Position der Bauteile zueinander zu kompensieren, wie sie beispielsweise durch thermische Einflüsse auftreten. Die exzentrische Lagerung ist leicht beweglich, so dass keine nachteiligen Kräfte im Bereich des Verzahnungseingriffs oder im Bereich der Lager entstehen.

### Bezugsziffern

1. Drehachse
2. Schneckenwelle
3. Elektromotor
4. Motorwelle
5. Kupplung
6. Schneckenverzahnung
7. Schneckenrad
8. Lenkwelle
9. Getriebegehäuse
10. Ende
11. Wälzlager
12. Ende
13. Wälzlager
14. Innenring
15. Wälzkörper
16. Zwischenring
17. Kugeln
18. Außenring
19. Lagersitz
20. Stift
21. Schraubenfedern
22. Wälzlager
23. Exzenterhebel
24. Schwenkachse
25. Schraubenfeder
26. Haken

## Patentansprüche

1. Elektromechanische Servolenkung mit einem elektrischen Servomotor (1), der eine Schneckenwelle (2) antreibt, die mit einem auf einer Lenkwelle (8) angeordneten Schneckenrad (7) kämmt, wobei das Schneckenrad (7) mit einer Eingangswelle eines Lenkgetriebes in Wirkverbindung steht und wobei die Schneckenwelle (2) und die Lenkwelle (8) in einem gemeinsamen Getriebegehäuse (9) drehbar gelagert sind, wobei die Schneckenwelle (2) ein freies motorfernes Ende (12) aufweist, das in einem Wälzlager (13) mit einem Innenring (14), Wälzkörpern (15) und einem Zwischenring (16) mit einer inneren Lauffläche für die Wälzkörper (15) gelagert ist, **dadurch gekennzeichnet, dass** der Zwischenring eine äußere Lauffläche für äußere Wälzkörper (17) aufweist, und wobei die innere Lauffläche und die äußere Lauffläche des Zwischenrings (16) exzentrisch zueinander angeordnet sind.

2. Servolenkung nach Anspruch 1, **dadurch gekennzeichnet, dass** der Zwischenring (16) mit den Wälzkörpern (17) und einem Außenring (18) ein zu dem Wälzlager (13) exzentrisches Wälzlager bildet, dessen Außenring (18) in einem Lagersitz (19) in dem Getriebegehäuse (9) sitzt.

3. Servolenkung nach einem der vorhergehenden Ansprüche, **dadurch gekennzeichne**t, dass der Zwischenring (16) mit Federmitteln (21) so vorgespannt ist, dass die Schneckenwelle (2) mit dem Schneckenrad (7) in Eingriff gedrängt wird.

4. Servolenkung nach einem der vorhergehenden Ansprüche, **dadurch gekennzeichnet, dass** das Wälzlager (13) auf dem freien Ende (12) der Schneckenwelle (2) ein Nadellager ist.

5. Servolenkung nach einem der vorhergehenden Ansprüche, **dadurch gekennzeichnet, dass** das den Zwischenring (16) in dem Getriebegehäuse (9) lagernde Wälzlager ein Kugellager ist.

6. Elektromechanischen Servolenkung mit einem elektrischen Servomotor (1), der eine Schneckenwelle (2) antreibt, die mit einem auf einer Lenkwelle (8) angeordneten Schneckenrad (7) kämmt, wobei das Schneckenrad (7) mit einer Eingangswelle eines Lenkgetriebes in Wirkverbindung steht und wobei die Schneckenwelle (2) und die Lenkwelle (8) in einem gemeinsamen Getriebegehäuse (9) drehbar gelagert sind, wobei die Schneckenwelle (2) ein freies motorfernes Ende (12) aufweist, das in einem Wälzlager (22) mit einem Innenring, Wälzkörpern und einem Außenring gelagert ist, wobei das Wälzlager (22) in einem Exzenterhebel (23) sitzt, **dadurch gekennzeichne**t, dass der Exzenterhebel (23) um eine außerhalb des Wälzlagers (22) liegende Schwenkachse (24) schwenkbar in dem Getriebegehäuse (9) gelagert ist und ein elektromechanischer Aktuator vorgesehen ist, um durch Betätigung des Exzenterhebels die Position der Schneckenwelle (2) relativ zu dem Schneckenrad (7) in Abhängigkeit von einer Steuerung einzustellen oder zu regeln.

7. Servolenkung nach Anspruch 6, **dadurch gekennzeichnet, dass** der Exzenterhebel (23) mittels einer Schraubenfeder (25) derart vorgespannt ist, dass die Schneckenwelle (2) in Eingriff mit dem Schneckenrad (7) gedrängt wird.

8. Servolenkung nach einem der vorhergehenden Ansprüche 1 bis 5, **dadurch gekennzeichnet, dass** ein elektromechanischer Aktuator vorgesehen ist, um durch Betätigung des Zwischenrings die Position der Schneckenwelle (2) relativ zu dem Schneckenrad (7) in Abhängigkeit von einer Steuerung einzustellen oder zu regeln.

9. Servolenkung nach Anspruch 8, **dadurch gekennzeichnet, dass** die Steuerung oder Regelung in Abhängigkeit von einem von dem Servomotor (3) aufgebrachten Drehmoment erfolgt.

## Claims

1. Electro-mechanical power-assisted steering with electric servomotor (1), which drives a screw-shaft (2), which meshes with a worm-wheel (7) that is itself mounted on steering-shaft (8); wherein the worm-wheel (7) has driving contact with the input shaft of a steering gear and wherein the screw-shaft (2) and the steering-shaft (8) are mounted together in a gear-box so as to be able to revolve, wherein the screw-shaft (2) comprises one open end (12) away from the engine, which is positioned, within a roller-bearing (13) with an inner ring (14), rolling elements (15), intermediate ring (16) and an interior tread for the rolling elements (15), **characterised in that** the intermediate ring comprises an external tread for external rolling elements (17), and wherein the interior tread and exterior tread of the intermediate ring (16) are each aligned eccentrically to the other.

2. Power-assisted steering according to claim 1, **characterised in that** the intermediate ring (16), with rolling elements (17) and an exterior ring (18), forms a roller-bearing aligned eccentrically to roller-bearing (13); the outer ring (18) of this roller-bearing resting on a seating (19) in the gear-box (9).

3. Power-assisted steering according to any one of the preceding claims, **characterised in that** the intermediate ring (16) is, by means of spring elements (21), placed under tension so that the screw-shaft (2) is kept interlocked with the worm-wheel (7).

4. Power-assisted steering according to any one of the preceding claims, **characterised in that** the roller-bearing (13) forms a needle-bearing at the free end (12) of the screw-shaft (2).

5. Power-assisted steering according to any one of the preceding claims, **characterised in that** the bearing which keeps the intermediate ring (16) in the gear-box (9) is a ball-bearing.

6. Electro-mechanical power-assisted steering with an electric servomotor 1, which drives the screw-shaft (2), which meshes with a worm-wheel (7) that is itself mounted on a steering-shaft (8); wherein the worm-wheel (7) has driving contact with an input shaft of a steering gear and wherein the screw-shaft (2) and the steering-shaft (8) are placed together in a gear-box so as to be able to revolve, wherein the screw-shaft (2) comprises one open end (12) away from the engine, which is positioned with an inner ring, rolling elements and an outer ring inside a roller-bearing (22), wherein the roller-bearing (22) rests in a cam lever (23), **characterised in that** the cam lever (23) is positioned around a swivel-axis which lies outside the roller-bearing (22), so that it can swivel within the gear-box (9), and an electro-mechanic actuator is provided for, so that, by movement of the cam lever, the position of the screw shaft (2) relative to the worm-wheel (7) can be adjusted or controlled according to any steering action.

7. Power-assisted steering according to claim 6, **characterised in that**, by means of a coil spring (25), the cam lever (23) is placed under tension in such a way that the screw-shaft (2) is kept interlocked with the worm-wheel (7).

8. Power-assisted steering according to any one of claims 1 to 5, **characterised in that** an electro-mechanical actuator is provided for, so that, by movement of the intermediate ring, the position of the screw shaft (2) relative to the worm-wheel (7) can be adjusted or controlled according to any steering action.

9. Power steering according to claim 8, **characterised in that** the steering or adjustment is effected dependently on a torque generated by the servo-motor (3).

## Revendications

1. Servodirection électromécanique comprenant un servomoteur électrique (1) qui entraîne un arbre à vis sans fin (2), lequel s'engrène avec une roue à vis sans fin (7) montée sur un arbre de direction (8), la roue à vis sans fin (7) étant en liaison de coopération avec un arbre d'entrée du mécanisme de direction, et l'arbre à vis sans fin (2) et l'arbre de direction (8) étant montés rotatifs dans un carter de mécanisme commun (9), où l'arbre à vis sans fin (2) présente une extrémité libre (12) éloignée du moteur qui est montée dans un roulement (13) possédant une bague intérieure (14), des corps roulants (15) et une bague intermédiaire (16) possédant une surface de roulement intérieure pour les corps roulants (15), **caractérisée en ce que** la bague intermédiaire (16) présente une surface de roulement extérieure pour les corps roulants extérieurs (17), et où la surface de roulement intérieure et la surface de roulement extérieure de la bague intermédiaire (16) sont disposées excentriquement l'une par rapport à l'autre.

2. Servodirection selon la revendication 1, **caractérisée en ce que** la bague intermédiaire (16) forme, avec les corps roulants (17) et une bague extérieure (18), un roulement excentrique par rapport au roulement (13), dont la bague extérieure (18) loge dans un siège de palier (19) dans le carter de mécanisme (9).

3. Servodirection selon une des revendications précédentes, **caractérisée en ce que** la bague intermédiaire (16) est précontrainte à l'aide de moyens à ressort (21) de sorte que l'arbre à vis sans fin (2) est poussé en engrènement avec la roue à vis sans fin (7).

4. Servodirection selon une des revendications précédentes, **caractérisée en ce que** le roulement (13) sur l'extrémité libre (12) de l'arbre à vis sans fin (2) est un roulement à aiguilles.

5. Servodirection selon une des revendications précédentes, **caractérisée en ce que** le roulement, logeant la bague intermédiaire (16) dans le carter de mécanisme (9), est un roulement à billes.

6. Servodirection électromécanique comprenant un servomoteur électrique (1) qui entraîne un arbre à vis sans fin (2), lequel s'engrène avec une roue à vis sans fin (7) montée sur un arbre de direction (8), la roue à vis sans fin (7) étant en liaison de coopération avec un arbre d'entrée du mécanisme de direction, et l'arbre à vis sans fin (2) et l'arbre de direction (8) étant montés rotatifs dans un carter de mécanisme commun (9), l'arbre à vis sans fin (2) présentant une extrémité libre (12) éloignée du moteur qui est montée dans un roulement (22) possédant une bague intérieure, des corps roulants et une bague extérieure, où le roulement (22) loge dans un levier excentrique (23), **caractérisée en ce que** le levier excentrique (23) est monté pivotant autour d'un axe de pivotement (24) à l'extérieur du roulement (22) dans le carter de mécanisme (9) et que l'on prévoit un actionneur électromécanique afin de régler ou ajuster, en actionnant le levier excentrique (23), la position de l'arbre à vis sans fin (2) par rapport à la roue à vis sans fin (7) en fonction d'une commande.

7. Servodirection selon la revendication 6, **caractérisée en ce que** le levier excentrique (23) est précontraint de telle sorte à l'aide d'un ressort hélicoïdal (25) que l'arbre à vis sans fin (2) est poussé en engrènement avec la roue à vis sans fin (7).

8. Servodirection selon une des revendications précédentes de 1 à 5, **caractérisée en ce que** l'on prévoit un actionneur électromécanique afin de régler ou ajuster, en actionnant la bague intermédiaire, la position de l'arbre à vis sans fin (2) par rapport à la roue à vis sans fin (7) en fonction d'une commande.

9. Servodirection selon la revendication 8, **caractérisée en ce que** la commande ou le réglage a lieu en fonction d'un moment de couple appliqué par la servodirection (3).
